# EUROPEAN PATENT APPLICATION

(11) **EP 4 517 928 A1**
(43) Date of publication of application: **05.03.2025**
(21) Application number: 23794786.6
(22) Date of filing: 08.03.2023
(51) Int. Cl.: H01M 10/60

(54) **HEATING SYSTEM FOR HEATING POWER BATTERY, AND ELECTRIC VEHICLE**

(30) Priority: 28.04.2022 CN 202221000901 U
(71) Applicant: BYD Company Limited, Shenzhen, Guangdong 518118 (CN)
(72) Inventor: ZHANG, Ke, Shenzhen, Guangdong 518118 (CN); GUO, Zizhu, Shenzhen, Guangdong 518118 (CN); PAN, Yi, Shenzhen, Guangdong 518118 (CN); ZHU, Yan, Shenzhen, Guangdong 518118 (CN); SUN, Huajun, Shenzhen, Guangdong 518118 (CN)
(74) Representative: Taor, Simon Edward William
(86) International application number: PCT/CN2023/080344
(87) International publication number: WO 2023/207350

(57) **Abstract**

Provided are a heating system for heating a power battery, and an electric vehicle. A power battery comprises a first battery cell group (1) and a second battery cell group (2) which are connected in series. The heating system comprises an inverter (3), an alternating current motor (4), a first controller (6), and a connection line (S 1), midpoints of three bridge arms of the inverter (3) being connected in a one-to-one correspondence manner to head ends of three-phase coils of the alternating current motor (4), the first controller (6) being used for inputting a drive signal to the inverter (3), the first battery cell group (1), the second battery cell group (2), the inverter (3), the alternating current motor (4) and the connection line (S1) constituting an alternating current self-heating loop, at least one heating device (7) being connected in series in the connection line, and the heating device (7) being used for heating the first battery cell group and/or the second battery cell group.

## Description

### CROSS-REFERENCE TO RELATED APPLICATIONS

The present disclosure claims priority to and benefits of Chinese Patent Application No. 202221000901.7, filed on April 28, 2022, and entitled "HEATING SYSTEM FOR HEATING POWER BATTERY, AND ELECTRIC VEHICLE". The entire content of the abovereferenced application is incorporated herein by reference.

### FIELD

The present disclosure relates to the field of vehicle technologies, and more specifically, to a heating system for heating a power battery, and an electric vehicle.

### BACKGROUND

Characteristics of a power battery are significantly affected by an ambient temperature. Especially in a low-temperature environment, energy and power characteristics of a lithium-ion power battery are severely attenuated. Therefore, the battery needs to be heated at a low temperature. How to improve heating performance of a power battery of an electric vehicle becomes a key issue.

### SUMMARY

An objective of the present disclosure is to provide a new technical solution of a heating system for heating a power battery.

Another objective of the present disclosure is to provide a new technical solution of an electric vehicle. The electric vehicle includes a power battery and a heating system for heating a power battery.

According to a first aspect of the present disclosure, a heating system for heating a power battery is provided. The power battery includes a first battery core group and a second battery core group connected in series. The heating system includes an inverter, an alternating current motor, a first controller, and one connection line. The inverter includes three bridge arms, a positive electrode of the power battery is connected to an upper bridge arm of the inverter, and a negative electrode of the power battery is connected to a lower bridge arm of the inverter. Midpoints of the three bridge arms of the inverter are connected to head ends of three-phase coils of the alternating current motor respectively, and tail ends of the alternating current motor are connected together to form a neutral point. A first end of the connection line is connected to the neutral point of the alternating current motor, and a second end of the connection line is connected to a connection point between the first battery core group and the second battery core group. The first controller is configured to input a drive signal to the inverter. The first battery core group, the second battery core group, the inverter, the alternating current motor, and the connection line constitute an alternating current self-heating loop. At least one heating device is connected in series in the connection line, and the heating device is configured to heat the first battery core group and/or the second battery core group.

According to an embodiment of the present disclosure, the heating device is attached to a surface of the first battery core group and/or a surface of the second battery core group.

According to an embodiment of the present disclosure, the heating device is arranged on a first surface of the first battery core group and/or a first surface of the second battery core group, the first surface of the first battery core group is a surface formed by stacking battery core units in the first battery core group, and the first surface of the second battery core group is a surface formed by stacking battery core units in the second battery core group.

According to an embodiment of the present disclosure, the heating device is arranged on a second surface of the first battery core group and/or a second surface of the second battery core group, the second surface of the first battery core group is a surface of at least one battery core unit in the first battery core group, and the second surface of the second battery core group is a surface of at least one battery core unit in the second battery core group.

According to an embodiment of the present disclosure, the second surface is a surface opposite a neighboring battery core unit.

According to an embodiment of the present disclosure, a deployment location of the heating device corresponds to a center of a battery core unit.

According to an embodiment of the present disclosure, the heating device corresponds to a low-temperature area of the first battery core group and/or a low-temperature area of the second battery core group. The low-temperature area is an area in which a temperature of a surface of the battery core group is less than a first preset value.

According to an embodiment of the present disclosure, a switch is arranged in the connection line. The heating system further includes a second controller. The second controller is configured to control the switch to turn on/off the connection line.

According to an embodiment of the present disclosure, a protection circuit is arranged in the connection line.

According to a second aspect of the present disclosure, an electric vehicle is provided. The electric vehicle includes a power battery and the heating system according to any one of the first aspect.

Based on the heating system for heating a power battery and the electric vehicle in the present disclosure, one connection line from the neutral point of the alternating current motor to the connection point between the first battery core group and the second battery core group is arranged, and the heating device for heating the power battery is connected in series in the connection line. In addition, the heating system heats the power battery in two manners: self-heating through an excitation current and heating through external thermoelectric conversion, so that a heating effect of the power battery is more uniform.

Other features and advantages of the present disclosure will become apparent based on the following detailed descriptions of exemplary embodiments of the present disclosure with reference to the accompanying drawings.

### BRIEF DESCRIPTION OF THE DRAWINGS

Accompanying drawings are incorporated into and form a part of this specification, show embodiments of the present disclosure, and are used together with descriptions of the present disclosure to describe the principle of the present disclosure.
FIG. 1 is a block diagram of a heating system for heating a power battery according to an embodiment of the present disclosure;
FIG. 2 is a specific circuit diagram of a heating system for heating a power battery according to an embodiment of the present disclosure;
FIG. 3 is a specific circuit diagram of a heating system for heating a power battery according to another embodiment of the present disclosure;
FIG. 4 is a schematic structural diagram of a battery core group according to an embodiment of the present disclosure; and
FIG. 5 is a schematic structural diagram of a battery core group according to another embodiment of the present disclosure.

In the drawings:
1. first battery core group; 2. second battery core group; P-connection point;
3. inverter; 4. alternating current motor; N-neutral point;
5. switch; 6. first controller; S1. connection line;
7. heating device; 8. protection circuit; and
9. second controller.

### DETAILED DESCRIPTION

Various exemplary embodiments of the present disclosure will now be described in detail with reference to the accompanying drawings.

The following descriptions of at least one example of the embodiments are merely illustrative in fact, and by no means serve as any limitation to the present disclosure and application or use thereof.

It should be noted that similar numerals and letters refer to similar items in the following accompanying drawings, and therefore, once an item is defined in a figure, further discussion is not required for the item in subsequent accompanying drawings.

In an electric vehicle, an inverter is connected between a power battery and an alternating current motor. One of main functions of the inverter is to convert, into an alternating current, a direct current that is output by the power battery, to drive an alternating current motor to rotate, thereby driving a wheel end to rotate. In a power battery heating solution in an embodiment of the present disclosure, a circuit topology among the power battery, the inverter, and the alternating current motor is used to heat the power battery for a temperature increase.

In this embodiment of the present disclosure, the power battery includes a first battery core group and a second battery core group connected in series, and the heating system for heating a power battery includes the inverter, the alternating current motor, a first controller, and one connection line. The inverter includes three bridge arms, a positive electrode of the power battery is connected to an upper bridge arm of the inverter, and a negative electrode of the power battery is connected to a lower bridge arm of the inverter. Midpoints of the three bridge arms of the inverter are connected to head ends of three-phase coils of the alternating current motor respectively, and tail ends of the alternating current motor are connected together to form a neutral point. A first end of the connection line is connected to the neutral point of the alternating current motor, and a second end of the connection line is connected to a connection point between the first battery core group and the second battery core group.

The first battery core group, the second battery core group, the inverter, the alternating current motor, and the connection line constitute an alternating current self-heating loop. The first controller is configured to input a drive signal to the inverter, and under an action of the drive signal, the inverter alternately turns on the first battery core group and the alternating current motor, as well as the second battery core group and the alternating current motor, so that the first battery core group and the second battery core group alternately charge each other, thereby heating the first battery core group and the second battery core group. At least one heating device is connected in series in the connection line, and the heating device is configured to heat the first battery core group and/or the second battery core group. A heating manner in which the heating device heats the first battery core group and/or the second battery core group is thermoelectric conversion. Under an action of a current in the connection line, electric energy is converted into heat energy, so that a temperature of the heating device increases. The heating device whose temperature increases may transfer heat to the first battery core group and/or the second battery core group.

Based on the heating system for heating a power battery provided in this embodiment of the present disclosure, the connection line is added based on the original circuit topology of the electric vehicle. The connection line is from the neutral point of the alternating current motor to the connection point between the first battery core group and the second battery core group. The first battery core group and the second battery core group may alternately charge each other by using the connection circuit. That is, a battery core of the power battery is self-heated by using an excitation current. In this case, a change to an original circuit of the electric vehicle is small, and it is simple and easy to implement the solution.

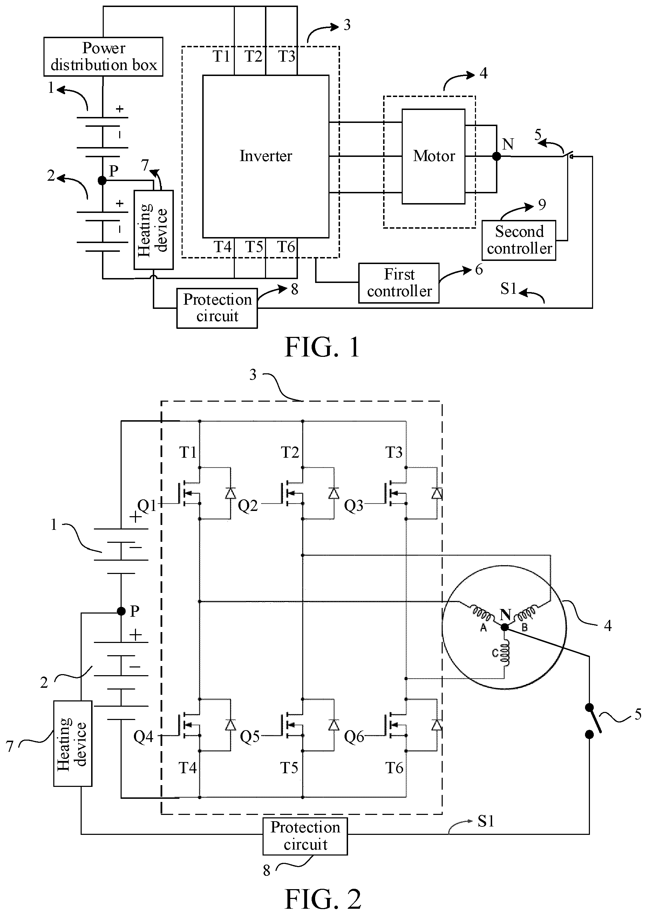

That is, in this embodiment of the present disclosure, in addition to self-heating the battery core by using the excitation current, the heating device is further configured to perform thermoelectric conversion heating on the battery core from outside of the battery core. The heating system heats the power battery in two manners: self-heating through the excitation current and heating through external thermoelectric conversion, so that a heating effect of the power battery is more uniform. As shown in FIG. 1 to FIG. 3, the following describes the heating system for heating a power battery provided in this embodiment of the present disclosure.

As shown in FIG. 1 to FIG. 3, the power battery includes a first battery core group 1 and a second battery core group 2 connected in series, and the heating system includes an inverter 3, an alternating current motor 4, a first controller 6, and one connection line S1.

The alternating current motor 4 is a star-connected, three tail ends of three-phase coils (a coil A, a coil B, and a coil C) are connected together as a common end, and the common end is a neutral point N of the alternating current motor 4.

The inverter 3 includes three bridge arms, a positive electrode of the power battery is connected to an upper bridge arm of the inverter 3, and a negative electrode of the power battery is connected to a lower bridge arm of the inverter 3. Midpoints of the three bridge arms of the inverter 3 are connected to head ends of the three-phase coils of the alternating current motor respectively.

A first end of the connection line S1 is connected to the neutral point N of the alternating current motor, and a second end is connected to a connection point P between the first battery core group and the second battery core group.

**In** an example, the first battery core group 1 and the second battery core group 2 belong to a same battery pack, and the battery pack provides a total positive port, a total negative port, and a third port that is led out from the connection point P. A second end of the connection line S1 is connected to the connection point P between the first battery core group 1 and the second battery core group 2 through the third port. In another example, the first battery core group 1 and the second battery core group 2 belong to different battery packs.

In an example, the first battery core group 1 and the second battery core group 2 belong to a same battery pack, and an electromotive force of the first battery core group 1 is the same as an electromotive force of the second battery core group 2. That is, the second end of the connection line S1 is connected to an equipotential point of the battery pack. The equipotential point means that an absolute value of a voltage difference from the point to the total positive port of the battery pack is equal to an absolute value of a voltage difference from the point to the total negative port of the battery pack. In an example, the first battery core group 1 and the second battery core group 2 belong to a same battery pack, and an electromotive force of the first battery core group 1 is different from an electromotive force of the second battery core group 2. That is, the second end of the connection line S1 is connected to an unequipotential point of the battery pack. The unequipotential point means that an absolute value of a voltage difference from the point to the total positive port of the battery pack is not equal to an absolute value of a voltage difference from the point to the total negative port of the battery pack.

As shown in FIG. 2, a battery core unit included in the first battery core group 1 and a battery core unit included in the second battery core group 2 are the same in model and different in quantity. Therefore, the electromotive force of the first battery core group 1 is different from the electromotive force of the second battery core group 2, and the second end of the connection line S1 is connected to the unequipotential point of the battery pack.

The first controller 6 is configured to input a drive signal to the inverter 3, to control the inverter 3 to alternately turn on the first battery core group 1 and the alternating current motor 4, as well as the second battery core group 2 and the alternating current motor 4, so that the first battery core group 1 and the second battery core group 2 alternately charge each other, thereby self-heating a battery core.

In an example, as shown in FIG. 1 and FIG. 2, the inverter 3 includes an IGBT T1, an IGBT T2, an IGBT T3, an IGBT T4, an IGBT T5, and an IGBT T6. The IGBTs T1 to T6 form three bridge arms. An IGBT (Insulated Gate Bipolar Transistor, insulated gate bipolar transistor) is a composite voltage-driven power semiconductor device that includes a BJT (Bipolar Junction Transistor, bipolar junction transistor) and a MOS transistor (Meial-Oxide-Semiconductor, metal-oxide-semiconductor field-effect transistor), and has advantages of high input impedance of the MOSFET field effect transistor and a low turn-on voltage drop of a GTR (Giant Transistor, giant transistor). As shown in FIG. 2, in the inverter 3, each IGBT is further connected to a diode in parallel, and the diode may play a role of circuit protection. In another embodiment, the IGBTs T1 to T6 may alternatively be replaced with MOS transistors, respectively. In another embodiment, the IGBTs T1 to T6 may alternatively be replaced with silicon carbide (SiC) power tubes, respectively.

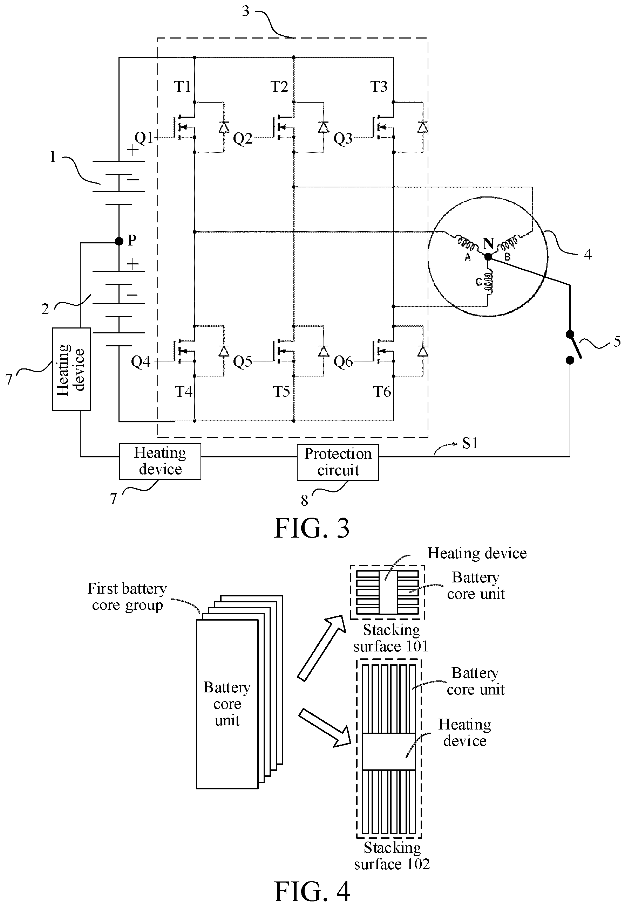

In this embodiment of the present disclosure, as shown in FIG. 2 and FIG. 3, the first controller 6 outputs six drive signals Q1 to Q6. The drive signal Q1 is applied to the IGBT T1, the drive signal Q2 is applied to the IGBT T2, the drive signal Q3 is applied to the IGBT T3, the drive signal Q4 is applied to the IGBT T4, the drive signal Q5 is applied to the IGBT T5, and the drive signal Q6 is applied to the IGBT T6. The first controller 6 alternately turns on a loop of the first battery core group 1 and the alternating current motor 4, and a loop of the second battery core group 2 and the alternating current motor 4 by applying the drive signals Q1 to Q6 to the IGBTs T1 to T6, so that the first battery core group 1 and the second battery core group 2 alternately charge each other. In an example, the first battery core group 1 discharges, the inverter 3 converts, into an alternating current, a direct current that is output by the first battery core group 1, and inputs the alternating current to the alternating current motor 4, and the alternating current motor 4 stores electric energy in a coil to charge the second battery core group 2. Then, the second battery core group 2 discharges, the inverter 3 converts, into an alternating current, a direct current that is output by the second battery core group 2, and inputs the alternating current to the alternating current motor 4, and the alternating current motor 4 stores electric energy in the coil to charge the first battery core group 1. Cyclically, the first battery core group 1 and the second battery core group 2 alternately charge each other by using the alternating current motor 4, to self-heat a battery core.

As shown in FIG. 1 and FIG. 2, in this embodiment of the present disclosure, at least one heating device 7 is connected in series in the connection line S1, and the heating device 7 is configured to heat the first battery core group 1 and/or the second battery core group 2. A heating manner in which the heating device 7 heats the first battery core group 1 and/or the second battery core group 2 is thermoelectric conversion. Under an action of a current in the connection line S1, electric energy is converted into heat energy, so that a temperature of the heating device 7 increases. The heating device 7 whose temperature increases may transfer heat to the first battery core group 1 and/or the second battery core group 2.

That is, in this embodiment of the present disclosure, in addition to self-heating the battery core by using the excitation current, the heating device 7 is further configured to perform thermoelectric conversion heating on the battery core from outside of the battery core. The heating system heats the power battery in two manners: self-heating through the excitation current and heating through external thermoelectric conversion, so that a heating effect of the power battery is more uniform.

In an example, a form, a model, and heating efficiency of the heating device 7 connected in series in the connection line S1 may be flexibly designed based on an actual requirement. A specific setting location of the heating device 7 may alternatively be flexibly designed based on a space environment and a heating requirement. In an example, device selection and layout may be performed on the heating device 7 based on a result of an actual test or a simulation experiment.

In an example, a plurality of heating devices are connected in series in the connection line S1, and forms, models, and heating efficiency of the plurality of heating devices may be the same or different. A specific quantity and distribution locations of the plurality of heating devices may be flexibly designed based on a space environment and a heating requirement. In an example, device selection and layout may be performed on the heating devices based on a result of an actual test or a simulation experiment.

In this embodiment of the present disclosure, the heating device may be any one of a heating film, a heating plate, or a heating wire. The heating device may be any one of a resistive heating film, a PTC (Positive Temperature Coefficient, positive temperature coefficient) heater, a vortex heater, a ceramic heater, or a silicone rubber heating plate, or may be another type of heating device. For example, a PTC heater and a resistive heating film are both connected in series in the connection line S1.

In an example, the heating device is attached to a surface of the first battery core group 1 and/or a surface of the second battery core group 2, to heat the first battery core group 1 and/or the second battery core group 2.

In an example, as shown in FIG. 3, in the connection line S1, two heating devices are connected in series. One heating device is attached to the surface of the first battery core group, and is configured to heat the first battery core group. The other heating device is attached to the surface of the second battery core group, and is configured to heat the second battery core group.

In an example, the heating device is arranged on a second surface of the first battery core group and/or a second surface of the second battery core group, the second surface of the first battery core group is a surface of at least one battery core unit in the first battery core group, and the second surface of the second battery core group is a surface of at least one battery core unit in the second battery core group. In an example, the second surface may be a surface of a battery core unit in the battery core group.

For example, if the battery core unit is blade-shaped, the heating device may be attached to an upper surface or a lower surface of the battery core unit. For example, if the battery core unit is square, the heating device may be attached to any surface of the battery core unit. For example, if the battery core unit is cylindrical, the battery core unit has three surfaces, including two circular end surfaces and one curved surface, and the heating device may be attached to the curved surface.

In another embodiment, the second surface may further refer to a surface opposite a neighboring battery core unit.

In this embodiment of the present disclosure, the first battery core group and the second battery core group may be formed by stacking a plurality of battery core units, and the battery core unit may include a cell or a battery module. The stacking may be set in a thickness direction of the battery core units, or may be set in a length or width direction of the battery core units.

In an example, the heating device is arranged on a first surface of the first battery core group and/or a first surface of the second battery core group, the first surface of the first battery core group is a surface formed by stacking battery core units in the first battery core group, and the first surface of the second battery core group is a surface formed by stacking battery core units in the second battery core group. In this manner, the heating device may simultaneously get close to a plurality of battery core units in the battery core group, so that the plurality of battery core units in the first battery core group are simultaneously heated, thereby implementing a more uniform heating effect. A surface formed by stacking may be in a left-right direction or may be in an up-down direction.

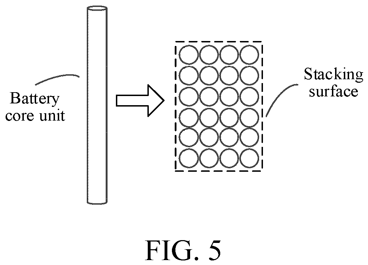

For example, as shown in FIG. 4, the first battery core group is formed by stacking a plurality of blade-shaped battery core units, the battery core units are stacked to form a stacking surface 101 and a stacking surface 102, and the heating device is arranged at the stacking surface 101 or the stacking surface 102. For example, as shown in FIG. 5, the second battery core group is formed by stacking a plurality of cylindrical battery core units, circular end surfaces of both ends of the plurality of battery core units respectively form stacking surfaces, and the heating device is arranged at the stacking surfaces. Alternatively, middle curved surfaces of the plurality of battery core units form stacking surfaces, and the heating device is arranged at the stacking surfaces.

In an example, the battery core units are stacked in a same direction to form a plurality of first surfaces, and the heating device is arranged on a first surface with a relatively large area, so that the heating device can be easily designed and laid out. For example, the heating device is arranged on the first surface with a relatively large area. With a same load power, a heating device in a form of a heating film may be selected. Since the heating film has a larger contact area, the battery core group is heated in a more uniform manner.

In an example, the heating device is arranged in a manner of being corresponding to a center of the battery core unit. When a battery is heated by using an excitation current, current density inside the battery core unit is unevenly distributed, a relatively large temperature difference in the battery core unit is often formed, temperatures at both ends of the battery core unit is relatively high, and a temperature in a middle is relatively low. By arranging the heating device in a manner of being corresponding to the center of the battery core unit, a low-temperature area of the battery core unit may be selectively heated locally, thereby greatly reducing a temperature difference between different areas of the battery core unit, and enhancing uniformity of overall temperature distribution.

In an example, the heating device corresponds to a low-temperature area of the first battery core group and/or a low-temperature area of the second battery core group. The low-temperature area of the battery core group is an area in which a temperature of a surface of the battery core group is less than a first preset value. The first preset value is, for example, 10 degrees Celsius. The first preset value may correspond to an interval range, for example, 10 to 15 degrees Celsius, and the first preset value is set within the interval range based on a working condition. In an example, the low-temperature area of the battery core group is a target area, a temperature of the target area is lower than the first preset value and lower than a temperature of a hightemperature area of the battery core group by at least a second preset value, for example, 5 degrees Celsius.

For example, as shown in FIG. 4, the first battery core group is formed by stacking a plurality of blade-shaped battery core units, the battery core units are stacked to form a stacking surface 101 and a stacking surface 102, the heating device is arranged at the stacking surface 101 or the stacking surface 102, and the heating device corresponds to a center of the battery core unit. In an example, the stacking surface 102 has a larger area, the heating device is arranged at the stacking surface 102, and the heating device corresponds to a center of the battery core unit.

As shown in FIG. 1 to FIG. 3, a switch 5 is arranged in the connection line S1, and the heating system further includes a second controller 9. The second controller 9 is configured to control an on/off state of the switch 5, so that the connection line S1 is turned on when the power battery needs to be heated, and is turned off when the power battery does not need to be heated, to ensure security of a vehicle and the power battery. For example, the second controller 9 controls the switch 5 to be turned off when the electric vehicle is in a driving state, to ensure security of the vehicle. In an example, the first controller 6 and the second controller 9 may be integrated together.

As shown in FIG. 1 to FIG. 3, a protection circuit 8 is arranged in the connection line S1, such as a fuse and a relay, to improve security of a battery heating process.

In an example, a material of a conducting wire used in the connection circuit S1 is metal with good conductivity, such as copper and aluminum, or may be a carbon-based material with good conductivity.

FIG. 1 further shows a power distribution box of an electric vehicle. The power distribution box distributes power mainly based on a power load of the electric vehicle.

Based on the heating system for heating a power battery provided in this embodiment of the present disclosure, the connection line is added based on the original circuit topology of the electric vehicle. The connection line is from the neutral point of the alternating current motor to the connection point between the first battery core group and the second battery core group. A change to an original circuit of the electric vehicle is small, and it is simple and easy to implement the solution.

Based on the heating system for heating a power battery provided in this embodiment of the present disclosure, by using the upper and lower bridge arms of the inverter in a time sharing manner, three inductance coils of a motor may be used to a greater extent to generate an alternating pulse current, thereby quickly heating two groups of battery cores.

In this embodiment of the present disclosure, at least one heating device is connected in series in the connection line, and the heating device is configured to heat the first battery core group and/or the second battery core group. A heating manner in which the heating device heats the first battery core group and/or the second battery core group is thermoelectric conversion. Under an action of a current in the connection line, electric energy is converted into heat energy, so that a temperature of the heating device increases. The heating device whose temperature increases may transfer heat to the first battery core group and/or the second battery core group.

That is, in this embodiment of the present disclosure, in addition to self-heating the battery core by using the excitation current, the heating device is further configured to perform thermoelectric conversion heating on the battery core from outside of the battery core. The heating system heats the power battery in two manners: self-heating through the excitation current and heating through external thermoelectric conversion, so that a heating effect of the power battery is more uniform.

In a heating process of the power battery, a frequency and a magnitude of a charging and discharging current, that is, the excitation current, are limited by a related component. The heating system provided in this embodiment of the present disclosure may reduce a degree of limitation of the excitation current, making it possible to heat the battery with a relatively large excitation current. In a self-heating working condition of a traditional battery pack, a maximum current of the inverter is limited by a minimum current of tolerance currents of the IGBTs T1 to T6. However, in this embodiment of the present disclosure, the maximum current of the inverter is limited by a sum of tolerance currents of the IGBTs T1, T2, and T3, and a sum of tolerance currents of T4, T5, and T6.

The first controller in this embodiment of the present disclosure may include a processor, a memory, and a program or instruction stored in the memory and executable by the processor. The program or instruction implements self-heating on the power battery when executed by the processor.

An embodiment of the present disclosure provides an electric vehicle, including a power battery and a heating system for heating a power battery as described in any one of the foregoing embodiments.

The embodiments of this specification are all described in a progressive manner, for same or similar parts in the embodiments, refer to these embodiments, and descriptions of each embodiment focus on a difference from other embodiments. For the embodiment of the electric vehicle, related details, refer to the partial descriptions of the embodiment of the heating system.

The embodiments of the present disclosure have been described above, and the foregoing descriptions are exemplary, not exhaustive, and is not limited to the disclosed embodiments. Many modifications and variations are obvious to those of ordinary skill in the art without departing from the scope of the described embodiments. Selection of terms used herein is intended to best explain the principle of the embodiments, practical application, or improvements to the technology in the market, or to enable other persons of ordinary skill in the art to understand the embodiments disclosed herein.

## Claims

1. A heating system for heating a power battery, the power battery comprising a first battery core group (1) and a second battery core group (2) connected in series, and the heating system comprising an inverter (3), an alternating current motor (4), a first controller (6), and a connection line (S1);
the inverter (3) comprising three bridge arms, a positive electrode of the power battery being connected to an upper bridge arm of the inverter (3), and a negative electrode of the power battery being connected to a lower bridge arm of the inverter (3); midpoints of the three bridge arms of the inverter (3) being connected to head ends of three-phase coils of the alternating current motor (4) respectively, and tail ends of the alternating current motor (4) being connected together to form a neutral point (N);
a first end of the connection line (S1) being connected to the neutral point (N) of the alternating current motor (4), and a second end of the connection line (S1) being connected to a connection point (P) between the first battery core group (1) and the second battery core group (2);
the first controller (6) being configured to input a drive signal to the inverter (3);
the first battery core group (1), the second battery core group (2), the inverter (3), the alternating current motor (4), and the connection line (S1) constituting an alternating current self-heating loop, and
at least one heating device (7) being connected in series in the connection line (S1), and the heating device (7) being configured to heat the first battery core group (1) and/or the second battery core group (2).

2. The heating system according to claim 1, wherein the heating device (7) is attached to a surface of the first battery core group (1) and/or a surface of the second battery core group (2).

3. The heating system according to claim 1, wherein the heating device (7) is arranged on a first surface of the first battery core group (1) and/or a first surface of the second battery core group (2), the first surface of the first battery core group (1) is a surface formed by stacking battery core units in the first battery core group (1), and the first surface of the second battery core group (2) is a surface formed by stacking battery core units in the second battery core group.

4. The heating system according to claim 1, wherein the heating device (7) is arranged on a second surface of the first battery core group (1) and/or a second surface of the second battery core group (2), the second surface of the first battery core group (1) is a surface of at least one battery core unit in the first battery core group (1), and the second surface of the second battery core group (2) is a surface of at least one battery core unit in the second battery core group (2).

5. The heating system according to claim 4, wherein the second surface is a surface opposite a neighboring battery core unit.

6. The heating system according to claim 3 or 4, wherein a deployment location of the heating device (7) corresponds to a center of a battery core unit.

7. The heating system according to any one of claims 1 to 5, wherein the heating device (7) corresponds to a low-temperature area of the first battery core group (1) and/or a low-temperature area of the second battery core group (2), wherein the low-temperature area is an area in which a temperature of a surface of the battery core group is less than a first preset value.

8. The heating system according to claim 1, wherein a switch (5) is arranged in the connection line (S1); the heating system comprises a second controller (9); and the second controller (9) is configured to control the switch (5) to turn on/off the connection line.

9. The heating system according to claim 1, wherein a protection circuit (8) is arranged in the connection line (S1).

10. An electric vehicle, comprising a power battery and the heating system according to any one of claims 1 to 9.
